Europäisches Patentamt

European Patent Office

Office européen des brevets

(11) Publication number: **0 130 569**
**B1**

(12) **EUROPEAN PATENT SPECIFICATION**

(45) Date of publication of patent specification: **18.01.89**  (51) Int. Cl.⁴: **H 04 N 5/33,** G 01 J 5/00

(21) Application number: **84107467.7**

(22) Date of filing: **28.06.84**

(54) Scanning imaging apparatus and method.

(30) Priority: **29.06.83 JP 117253/83**

(43) Date of publication of application:
**09.01.85 Bulletin 85/02**

(45) Publication of the grant of the patent:
**18.01.89 Bulletin 89/03**

(84) Designated Contracting States:
**DE FR GB IT NL**

(56) References cited:
EP-A-0 023 131
EP-A-0 026 673
DE-B-2 940 536
GB-A-1 278 671

(73) Proprietor: **FUJITSU LIMITED**
**1015, Kamikodanaka Nakahara-ku**
**Kawasaki-shi Kanagawa 211 (JP)**

(72) Inventor: **Murakami, Yoshishige**
**466-18, Edacho,Midori-ku**
**Yokohama-shi Kanagawa, 227 (JP)**
Inventor: **Inoue, Takeshi**
**31-10, Sagamiono 7-chome**
**Sagamihara-shi Kanagawa, 228 (JP)**
Inventor: **Tanaka, Atsushi**
**9-19, Chuo 5-chome**
**Sagamihara-shi Kanagawa, 229 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

The present invention relates to imaging apparatus.

A thermal imaging apparatus is used to obtain a thermal image by receiving passively the infrared radiation from an observed object with an infrared sensor or detector. The technology concerned with the thermal imaging apparatus has recently become well known as "thermography" which is applied to the medical or industrial field and is useful for non-invasive diagnosis or non-destructive examination.

The thermal imaging apparatus generally provides a thermal image by means of an optical scan and an electronic display which are synchronized with each other. However, the optical scan speed cannot be increased so high as the television (TV) scan speed because of the thermography principle. Therefore, a conversion technique which converts the speed of the optical scan to that of the TV display is required to observe and record easily the thermal images by the conventional TV monitor and video tape recorder.

The conversion technique can be carried out by a memory device such as a hard memory, e.g. a semiconductor integrated circuit memory (IC memory); that is, the signal data detected by the optical scan at relatively slow speed are first stored in the IC memory, and the stored data are read out and displayed by the TV technique.

In "thermography", it is often required to check the time variation of the thermal images of an observed object, because the variation includes valuable information concerning features of the observed object. The "thermal images each having been formed at a different time" will be called the "thermal time images" hereafter.

In the displaying method of the prior art, the variation of the thermal time images could only be compared by observing thermal time images sequentially displayed on the TV monitor. Therefore, when the comparison between the thermal time images was required, it could best be achieved only by forming hard copies like photographs of each thermal time image.

Previously, in an imaging apparatus, there has been used a method to display the different images simultaneously on an electronic display device like a TV monitor using a memory device like a large IC memory which has a large storage capacity. The method is as follows: the data of each different image are stored in a part of the large IC memory sequentially, and the all memorized data are read out by the TV technique and displayed simultaneously on a TV monitor. In this method, however, many memory elements (dot memories) and a complicated writein and read-out control means are required. Therefore, this method is difficult to adopt to an actual thermal imaging apparatus from the economical viewpoint. Consequently, it has been a severe problem to realize economically simultaneous display of the thermal time images on a TV monitor for the thermal imaging apparatus.

An object of the invention is to provide thermal imaging apparatus which can display economically the thermal time images of an observed object simultaneously on a TV monitor.

Another object of the present invention is to provide thermal imaging apparatus having reduced storage capacity of dot memories in the hard memory, e.g. to be just sufficient to store the image data of a single frame of optical scanning.

Still another object of the present invention is to simplify the control means of the hard memory to write in and read out the image data.

The above objects are accomplished by the thermal imaging apparatus according to the appended claims.

According to one aspect of the invention, there is provided thermal imaging apparatus having the following two operational modes:

an ordinary mode which may be called a single-mode with which the apparatus displays a thermal image of an observed object at the present time on a TV monitor screen using its full size, directing the optical scanning direction so that the object is almost in the middle of the optical scanning field-of-view (FOV); and

a new mode which may be called a multi-mode with which the apparatus can display thermal time images of an object simultaneously on a TV monitor screen, directing the optical scanning direction so that the object is in a limited part of the field-of-view (FOV); a left half or upper half part for example.

By the thermal imaging apparatus of the present invention, comparison between the thermal time images of an object can be made simply and economically to obtain valuable information about the object.

For a better understanding of the invention, and to show how the same may be carried into effect, reference will now be made, by way of example, to the accompanying drawings, in which:

Figure 1 depicts a typical constitution of a thermal imaging apparatus;

Figure 2 is a block diagram of a prior art thermal imaging apparatus having a hard memory;

Figure 3 shows an address arrangement of the memory dots in the hard memory whose capacity is just enough to store the image data of a single frame optical scanning in the field-of-view;

Figure 4 is a block diagram of a usual hard memory having a large capacity of the memory dots and the usual adjacent control units being applied to the thermal imaging apparatus of the prior art in Figure 2 so that the hard memory can store the image data of a number of the optical scanning frame;

Figure 5 is a block diagram of an embodiment of the present invention which can display two thermal time images simultaneously on the left and right part of the TV monitor screen;

Figure 6 is a block diagram of another embodiment of the present invention which can display two thermal time images simultaneously on the upper and lower part of the TV monitor screen; and

Figure 7 is an illustration of a thermal image display by still another embodiment of the present invention which displays four thermal time images simultaneously on a TV monitor screen.

Before discussing the present invention, the principle of operation of thermal imaging apparatus, in particular the functional relationship between an optical scan, a hard memory, and a TV display, will be explained for better understanding of the present invention.

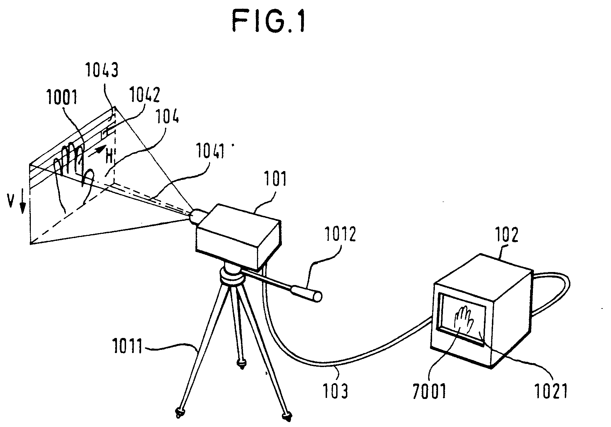

Figure 1 depicts a typical constitution of a thermal imaging apparatus. As shown in Figure 1, the thermal imaging apparatus substantially consists of a camera unit 101, a display unit 102, and a connecting cable 103. The camera unit 101 scans within a field-of-view (FOV) 104 with an instantaneous field-of-view (IFOV) 1042 receiving passively the infrared radiation from the observed object 1001 by an infrared detector which provides analogue detected video signals. The optical scanning is generally performed by moving the IFOV 1042 in horizontal and vertical directions sequentially as shown in Figure 1. In the Figure, reference numeral 1043 identifies a horizontal scanning line, and arrows H and V show respectively the horizontal and vertical movement of the IFOV 1042. The detected video signals pass to the display unit 102 through the connecting cable 103 and a thermal image 7001 of the observed object 1001 can be displayed on a TV monitor screen 1021 of the display unit 102. The camera unit 101 is usually mounted on a mount such as a tripod 1011 and the direction of the FOV 104 (the direction of a center line 1041 of the FOV 104) is controlled by a handle 1012 of the tripod 1011 so that the observed object 1001 is placed almost in the middle of the FOV 104.

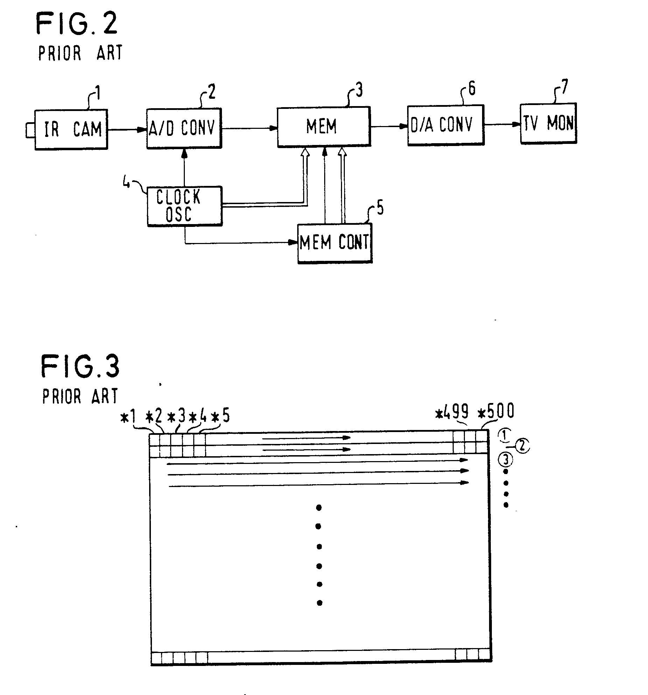

As already described, the speed of the optical scan is not so high as that of a conventional TV display, because if the speed of the optical scan is increased, the sensitivity of the apparatus decreases. Therefore, a hard memory is required to convert the optical scan speed to TV displaying speed as mentioned before. The hard memory will be explained by reference to Figure 2.

Figure 2 is a block diagram of a thermal imaging apparatus of the prior art having a hard memory. In Figure 2, each block is included in the display unit 102 in Figure 1 except an infrared camera unit 1 (IR CAM 1) which is equivalent to the camera unit 101 in Figure 1, The Figure additionally shows an analog digital converter 2 (A/D CONV), a hard memory 3 (MEM), an input clock oscillator 4 (CLOCK OSC), a memory controller 5 (MEM CONT), a digital analog converter 6 (D/A CONV), and a television monitor 7 (TV MON).

In Figure 2, the analog video signals from the IR CAM 1 are supplied to the A/D CONV 2 sequentially following the optical scan, and are converted to the digital video signals in accordance with a timing signal from the CLOCK OSC 4. The MEM 3 has IC dot memories whose capacity corresponds to that of the picture elements provided by the IFOV 1042 and the FOV 104 in Figure 1. The IC dot memories are arranged in horizontal and vertical rows corresponding to the optical scan. The digital video signals from the A/D CONV 2 are stored in the MEM 3 as the image data. This storing process can be carried out under the control of the CLOCK OSC 4 and the MEM CONT 5. That is, the MEM CONT 5 controls the MEM 3 (as indicated by the solid line) to switch to write-in or read-out operation whilst receiving a timing signal from the CLOCK OSC 4, and the CLOCK OSC 4 provides the write-in address signals to the MEM 3 to store the digital video signals from the A/D CONV 2 at the designated addresses corresponding to the picture construction of the FOV 104 shown in Figure 1.

The MEM CONT 5 also controls the MEM 3 to read out the image data (as indicated by a double line) by generating address control signals. The read-out can be made by the TV scanning technique, and the digital video signals read out from the MEM 3 are converted to the analog video signals by the D/A CONV 6 and are displayed on the TV MON 7 as a TV picture.

Figure 3 shows an address arrangement of the memory dots in the MEM 3. In the Figure, ①, ②, ③, --- show the rows (vertical address) of the dot memories corresponding to the scanning lines 1043 in Figure 1, and each row, for example, consists of 500 dot memories each being named such as *1, *2, ---, *500; these numbers correspond to the horizontal addresses, so that the thermal imaging apparatus has 500 picture elements in the horizontal direction in the FOV.

As described above, in the thermal imaging apparatus of the prior art, the video signals taken from one optical frame scan by the IR CAM 1 were stored in the MEM 3 using its whole dot memories, and the video data of the MEM 3 were read out and displayed on the TV MON 7 using the whole area of a monitor screen. This meant that thermal images generated at different times could not be displayed on the TV monitor at the same time.

Concerning this problem, it may be considered that a way to comply with the requirement is to increase the capacity of the hard memory, applying the usual technique of the hard memory, so that the total data of thermal images occurring at different times can be stored and be displayed simultaneously on a monitor.

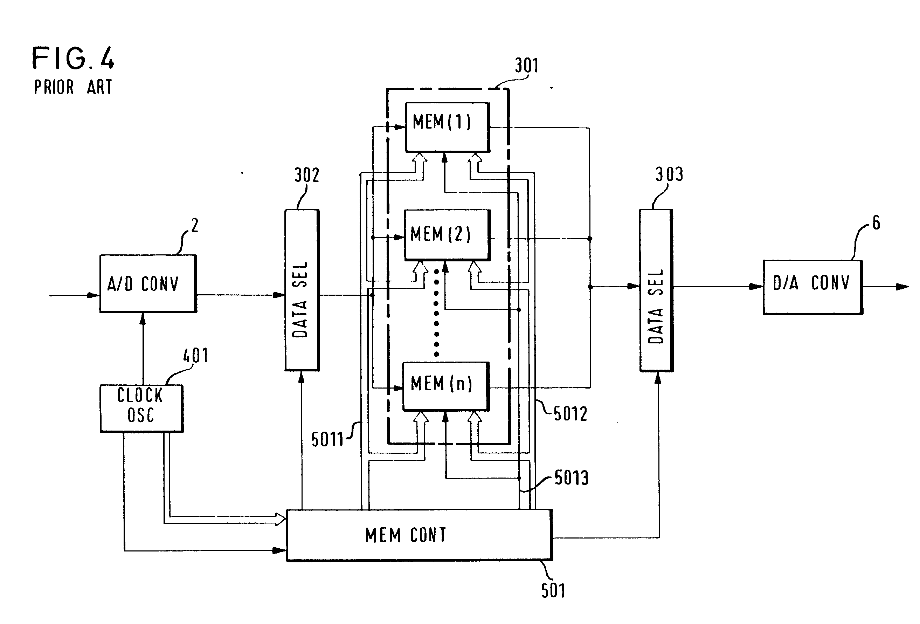

Figure 4 is a block diagram of a hard memory having a large capacity of memory dots and the usual adjacent control units being applied to the thermal imaging apparatus of the prior art in Figure 2 so that the hard memory can store the image data of a number of optical scanning frames (the Figure shows n frames). The Figure shows a large hard memory 801 (MEM), a clock oscillator 401 (CLOCK OSC), a memory controller 501 (MEM CONT), an input data selector 302 (DATA SEL), and an output data selector 303 (DATA SEL). The A/D CONV 2 and D/A CONV 6 have the same function as the units having the same numerals in Figure 2.

As shown in Figure 4, the MEM 301 consists of a large number of memory dots which is sufficient to store all groups of image data occurring at different times. A block memory (1) (MEM(1), MEM(2), ---, and MEM(n)) is provided for the memory dots, each memory section of the block corresponding to one frame of optical scanning. Here, "n" means that n frames can be stored; that is, n thermal images are intended to be displayed simultaneously on the TV monitor.

A main unit for controlling the MEM 301 is a MEM CONT 501 which controls the DATA SEL 302, MEM 301, and DATA SEL 303 whilst receiving a timing signal (shown by solid line), and a write-in address control signal (shown by double line) from the CLOCK OSC 401. The MEM CONT 501 controls the block memory sections to switch the operation of the write-in or read-out of the image data for the block memory sections as shown by a solid line 5013.

The digital video signals from the A/D CONV 2 are selected by the DATA SEL 302 controlled by a control signal from the MEM CONT 501 so that the group of the digital video signals of one frame of optical scanning are stored in a designated block memory section. The storing process can be carried out also by control of the write-in address signals from the MEM CONT 501, as shown by a double line 5011.

The image data stored in the MEM 301 are read out by the read-out address signals from the MEM CONT 501, as shown by a double line 5012, and are sent to the DATA SEL 303 to control the timing for the read-out video signal. The output from the DATA SEL 303 goes to the D/A CONV 6 and the digital video signals are displayed on the TV monitor so that n thermal time images of an observed object are displayed simultaneously on a TV monitor screen.

If the thermal imaging apparatus uses the large hard memory as described above, it will be possible to realize observation of the thermal time images simultaneously on a TV monitor screen. However, it is also an obvious fact that great expense is required for the large hard memory and the complicated control. Therefore, it can be said that the thermal imaging apparatus applying the large hard memory is only a theoretical idea. It is impossible to realize in practice from an economical viewpoint as already mentioned.

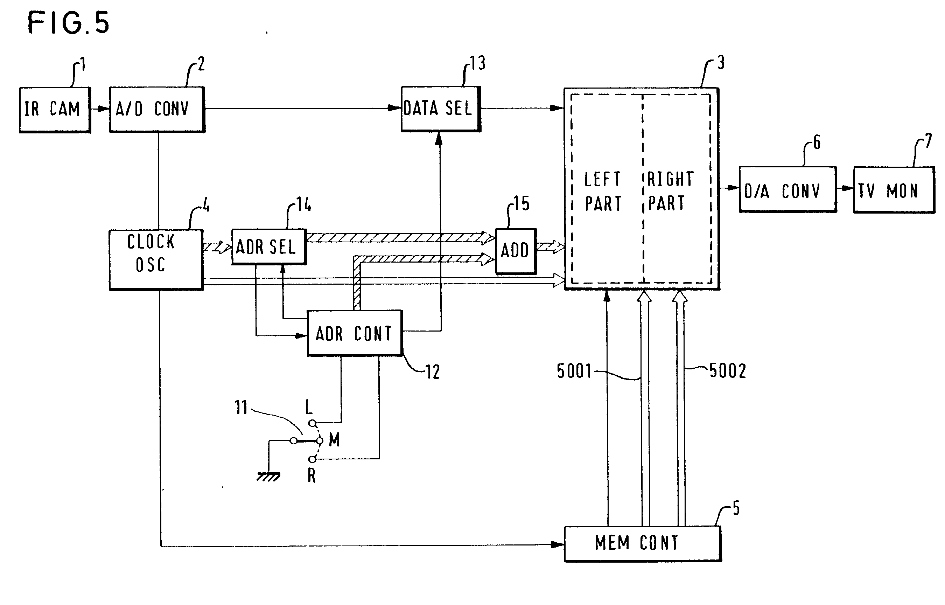

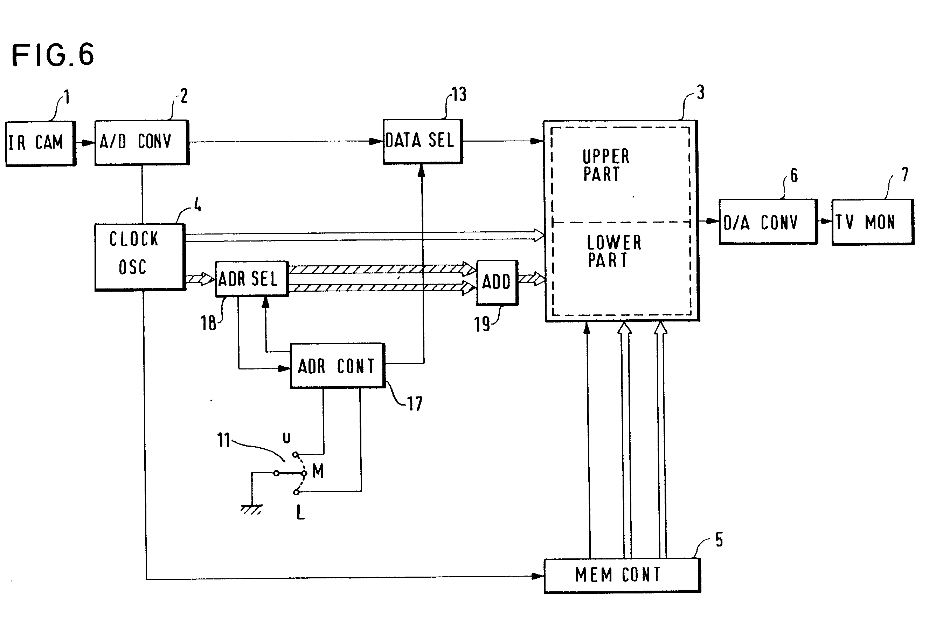

The thermal imaging apparatus of the present invention is intended to solve the problem economically. The present invention will be described in relation to preferred embodiments illustrated in Figure 5 and Figure 6. Each embodiment uses a hard memory having the same capacity as the MEM 3 in Figure 2. However, the use of the hard memory is quite different from the prior art.

In the embodiments of Figures 5 and 6, as the ordinal hard memory stores image data of two optical frame scans, two thermal time images can be displayed simultaneously on a left and right part of the TV screen in Figure 5 and on an upper and lower part of the TV screen in Figure 6.

Figure 5 is a block diagram of an embodiment of the present invention which uses a hard memory to memorize two sets of image data, each being at different times, in the left and right part thereof. In the Figure, blocks having the same reference numerals as in Figure 2 have the same function as in Figure 2. In addition, the Figure illustrates a left-middle-right switch 11 (SWT), an address controller 12 (ADR CONT), a data selector 13 (DTA SEL), an address selector 14 (ADR SEL), and an adder 15 (ADD). Furthermore, in the Figure, hatched and unhatched arrowed double lines are present between the CLOCK OSC 4 and the MEM 3 for the write-in address signals. The hatched double lines are for the horizontal write-in address signals, and the unhatched double line is for the vertical write-in address signals for the MEM 3.

In Figure 5, SWT 11 is switched by the operator. When SWT 11 is switched to the middle position (M), the thermal imaging apparatus (referred to as "the apparatus" hereafter) works in single-mode: that is, the apparatus works in the same way as that of Figure 2. When it is switched to the left (L) or right (R) position, the apparatus works in multi-mode; that is, directing the IR CAM 1 so that an observed object is in the left or right half part of the FOV. Switching the SWT 11 in a sequence of L and R at times $t_1$ and $t_2$ respectively, for instance, causes the image data of the observed object to be stored in a half (L or R) of the whole memory dots in the MEM 3. Consequently, the read-out thermal images at the time $t_1$ and $t_2$ can be displayed simultaneously on a single screen of the TV MON 7. The actual process to perform the above function is as follows.

In Figure 5, the vertical write-in address signals directly go to the MEM 3 from the CLOCK OSC 4 and control the vertical addresses of the MEM 3 in the same way as that in Figure 2. However, the horizontal write-in address signals are controlled by the additional units: the SWT 11, the ADR CONT 12, the ADR SEL 14, and the ADD 15. Further, the DTA SEL 13 is provided between the A/D CONV 2 and the MEM 3 to control the digital video signals to be stored in the MEM 3.

When the SWT 11 is switched to the middle position (M), the ADR CONT 12 sends a signal of value "O" to the ADD 15, so that the write-in address signals from the CLOCK OSC 4 go to the MEM 3. Meanwhile, the ADR CONT 12 controls the DTA SEL 13 to "on" so that the digital video signals from the A/D CONV 2 go to the MEM 3. As a result, the digital video signals for one frame of optical scanning are stored in the whole memory dot by dot in the same way as explained with reference to Figure 2.

The function of the MEM CONT 5 is the same as that of the MEM CONT 5 in Figure 2, but in Figure 5, the readout signals are shown in more detail as two double lines; one (5001) is for horizontal and the other (5002) is for vertical read-out address signals. By the control of the MEM CONT 5, the thermal time images are displayed on the screen of the TV MON 7 in a single-mode.

When the apparatus is required to change the mode from the single-mode to a multi-mode, the IR CAM 1 should be directed so that an observed object is in the left half part of the FOV, then the SWT 11 is switched into the L position. Then the ADR CONT 12 sends a signal of value "O" to the ADD 15 and controls the ADR SEL 14, so that the write-in address signals from the CLOCK OSC 4 go to the left part of MEM 3. As the ADR SEL 14 sends a signal of the value "250" back to the ADR CONT 12, the ADR CONT 12 controls the DTA SEL 13 so that the digital video signals for the limits of the address from *1 to *250 (see Figure 3) go to the MEM 3 from the A/D CONV 2 and the other digital video signals for the address from *251 to *500 are rejected and "O" signals are sent to the MEM 3. As a result, in the MEM 3, the image data of the horizontal addresses from *1 to *250 are stored and the other memory dots of the horizontal addresses from *251 to *500 are cleared.

Next, when the SWT 11 is switched into the R position keeping the direction of the IR CAM 1 in the state mentioned above, the ADR CONT 12 sends a signal of the value "250" to the ADD 15, controls the DTA SEL 13 to be "on", and controls the ADR SEL 14 so that only the write-in address signals from *1 to *250 go to the MEM 3. By so doing, the image data of the same observed object can be stored in the horizontal addresses from *251 to *500 and the image data which have been stored in the horizontal addresses from *1 to *250 can be retained.

Consequently, the image data at the first time $(t_1)$ can be stored in the left half part and the image data at the second time $(t_2)$ can be stored in the right half part of the memory dots in the MEM 3. Therefore, two thermal time images each having been at different time $(t_1, t_2)$ can be compared with each other simultaneously on the screen of the TV MON 7.

Figure 6 shows a block diagram of another embodiment of the present invention, In Figure 6, units having the same numeral as in Figure 5 have the same function. However, in this case, the switching positions of the SWT 11 are called an "upper" (U) and a "lower" (L) instead of L and R as in Figure 5. Reference numeral 17 is an address controller (ADR CONT), 18 is an address selector (ADR SEL), and 19 is an adder (ADD). The arrowed double lines present between the CLOCK OSC 4 and the MEM 3 are for the write-in address signals, the hatched lines being for the vertical write-in address signals.

The thermal imaging apparatus (hereinafter referred to as "the apparatus") of this embodiment also has two operational modes; a single-mode and a multi-mode as mentioned in the former embodiment of the invention.

In Figure 6, the horizontal write-in address signals pass directly to the MEM 3 from the CLOCK OSC 4 and control the horizontal addresses of the MEM 3 in the same way as in Figure 2. However, the vertical write-in address signals are controlled by the additional units such as the SWT 11, the ADR CONT 17, the ADR SEL 18, and the ADD 19. When multi-mode is required, the SWT 11 should be switched into U or L position and the IR CAM 1 should be directed so that an observed object is in the upper half part of the FOV. When SWT 11 is switched in a sequence of U and L at the time $t_1$ and $t_2$ respectively, the ADR CONT 17 controls the DTA SEL 13, the ADR SEL 18, and the ADD 19 so that the image data of the observed object, each having been taken at different times $t_1$ and $t_2$, are stored sequentially in the upper and the lower half part of the memory dots in the MEM 3. This is achieved in a similar way to that in Figure 5: that is, the image data at the first time $t_1$ are stored in an upper half part of the memory dots, while the memory dots of a lower half part of the memory are cleared in the MEM 3 as the first step, and at the second step, the image data at the time $t_2$ are stored in a lower half part of the memory dots whilst holding the image data at the first step in the upper half memory dots. The image data memorized in the MEM 3 are read out by the control of the MEM CONT 5 in the similar way of that in Figure 5, so that two thermal time images can be compared with each other simultaneously on the upper and lower half parts of the TV monitor screen.

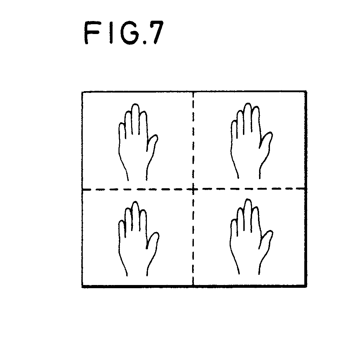

Furthermore, although a block diagram is omitted, the embodiments of Figures 5 and 6 may be combined together, whereby four thermal time images can be displayed simultaneously on a screen of the TV monitor. Figure 7 shows an illustration of the screen where four thermal time images are displayed.

In conclusion, it can be said that: by the thermal imaging apparatus of the present invention, a plurality of the thermal images of an observing object, each having been made at a different time, can be observed simultaneously on a single screen of a TV monitor simply and economically.

Furthermore, the present invention can be applied to not only thermal imaging apparatus but also to other imaging apparatus having a scanning sensor and a displaying device, so that a plurality of the sensed images of an observed or inspected object, each having been made at a different time, can be observed simultaneously on a single screen of the displaying device to obtain the information of the object by comparing the sensed images with each other.

Thus, a plurality of thermal images of an observed object, each relating to different preceding times, are divisionally displayed simultaneously on a television monitor screen to obtain more information of the object from comparison of the combination of the thermal images.

## Claims

1. An imaging apparatus which has a sensing means (1) arranged to scan an object with an instantaneous sensing field at a first speed, a display means (7, 102) arranged to display a sensed image of said object on a screen of said displaying means at a second scan speed, and a memory device (3) for use in converting said first speed to said second speed, characterised in that:

(a) means (12, 13, 14, 15; 13, 17, 18, 19) are provided for writing into a portion of the memory elements of said memory device (3) first image data for a limited part of a total sensing field (104) of said sensing means (1) obtainable by a single frame scan at said first speed;

(b) means (12, 13, 14, 15; 13, 17, 18, 19) are provided for writing into a further portion of said memory device (3) second image data, obtained at different time from said first image data for said limited part of said sensing field (104) at said first speed; .

(c) means (6) are provided for reading out said first and second image data from said memory device (3) at said second speed; and

(d) the display means (7, 102) are arranged to display first and second sensed images corresponding to said first and second image data read out from said memory device (3), at said second speed, together on said screen.

2. Apparatus according to claim 1 wherein means are provided for directing the direction of said total sensing field so that said object is within a predetermined limited part of said total sensing field.

3. Apparatus according to claim 1 or 2 wherein said sensing means consists of an infrared camera (1) arranged to scan an object by scanning an instantaneous total field-of-view at a relatively low scan speed, said display means comprises a television monitor (7) arranged to display a thermal image of said object on a screen of the television monitor at a relatively high television scan speed, and said memory device (3) is arranged to convert said relatively low scan speed to said relatively high television scan speed.

**Patentansprüche**

1. Abbildungsgerät, das Abtastmittel (1), die angeordnet sind, um einen Gegenstand mit einem unmittelbaren Abtastfeld mit einer ersten Geschwindigkeit abzutasten, Anzeigemittel (7, 102), die angeordnet sind, um ein abgetastetes Bild des Gegenstandes auf einem Schirm der Anzeigemittel bei einer zweiten Abtastgeschwindigkeit anzuzeigen und eine Speichereinrichtung (3) für die Verwendung bei der Umwandlung der ersten Geschwindigkeit in die zweite Geschwindigkeit besitzt,

dadurch gekennzeichnet, daß

(a) Mittel (12, 13, 14, 15; 13, 17, 18, 19) vorgesehen sind, um erste Bilddaten für einen begrenzten Teil eines vollständigen Abtastfeldes (104) der Abtastmittel (1), das bei einer einzelnen Vollbildabtastung bei der ersten Geschwindigkeit erzielbar ist, in einen Bereich der Speicherelemente der Speichereinrichtung (3) einzuschreiben;

(b) Mittel (12, 13, 14, 15; 13, 17, 18, 19) vorgesehen sind, um zweite Bilddaten, die zu einem anderen Zeitpunkt aus den ersten Bilddaten für den begrenzten Teil des Abtastfeldes (104) bei der ersten Geschwindigkeit erzielt werden, in einen weiteren Bereich der Speichereinrichtung (3) einzuschreiben;

(c) Mittel (6) vorgesehen sind, um die ersten und zweiten Bilddaten aus der Speichereinrichtung (3) bei der zweiten Geschwindigkeit auszulesen; und

(d) die Anzeigemittel (7, 102) angeordnet sind, um die ersten und zweiten abgetasteten Bilder entsprechend den ersten und zweiten aus der Speichereinrichtung (3) ausgelesenen Bilddaten, bei der zweiten Geschwindigkeit zusammen auf den Bildschirm anzuzeigen.

2. Gerät nach Anspruch 1, bei dem Mittel vorgesehen sind für die Ausrichtung der Richtung des vollständigen Abtastfeldes, so daß der Gegenstand innerhalb eines festgelegten begrenzten Teils des vollständigen Abtastfeldes liegt.

3. Gerät nach Anspruch 1 oder 2, bei dem die Abtastmittel aus einer Infrarotkamera (1) bestehen, die angeordnet ist, um einen. Gegenstand durch Abtastung eines unmittelbaren vollständigen Blickfeldes mit einer relativ niedrigen Abtastgeschwindigkeit abzutasten, daß die Anzeigemittel einen Fernsehmonitor (7) aufweisen, der angeordnet ist, um ein thermisches Abbild des Gegenstands auf dem Bildschirm des Fernsehmonitors bei einer relativ hohen Fernsehabtastgeschwindigkeit anzuzeigen, und daß die Speichereinrichtung (3) angeordnet ist, um die relativ niedrige Abtastgeschwindigkeit zur relativ hohen Fernsehabtastgeschwindigkeit zu konvertieren.

**Revendications**

1. Appareil de formation d'image, qui possède un moyen capteur (1) conçu pour balayer un objet suivant un champ de détection instantané à une première vitesse, un moyen afficheur (7, 102) conçu pour afficher l'image captée dudit objet sur un écran dudit moyen afficheur à une deuxième vitesse de balayage, et un dispositif de mémorisation (3) servant à transformer ladite première vitesse en ladite deuxième vitesse, caractérisé en ce que:

(a) des moyens (12, 13, 14, 15; 13, 17, 18, 19) sont prévus pour écrire dans une partie des éléments de mémorisation dudit dispositif de mémorisation (3) des premières données d'image relatives à une partie limitée d'un champ de détection total (104) dudit moyen capteur (1) pouvant être obtenu par un balayage d'image complète unique à ladite première vitesse;

(b) des moyens (12, 13, 14, 15; 13, 17, 18, 19) sont prévus pour écrire dans une autre partie dudit dispositif de mémorisation (3) des deuxièmes données d'image, obtenues à un instant différent desdites premières données d'images relatives à ladite partie limitée dudit champ de détection (104) à ladite première vitesse;

(c) des moyens (6) sont prévus pour lire lesdites premiéres et deuxièmes données d'image dans ledit dispositif de mémorisation (3) à ladite deuxiéme vitesse; et

(d) le moyen afficheur (7, 102) est conçu pour afficher des première et deuxième images captées, correspondant auxdites premières et deuxièmes données d'image lues dans ledit dispositif de mémorisation (3), à ladite deuxième vitesse, ensemble sur ledit écran.

2. Appareil selon la revendication 1, où des moyens sont prévus pour orienter la direction dudit champ de détection total de façon que ledit objet se trouve à l'intérieur d'une partie limitée prédéterminée dudit champ de détection total.

3. Appareil selon la revendication 1 ou 2, où ledit moyen capteur est constitué d'une caméra infrarouge (1) conçue pour balayer un objet par balayage d'un champ visuel total instantané à une vitesse de balayage relativement faible, ledit moyen afficheur comprend un moniteur de télévision (7) conçu pour afficher une image thermique dudit objet sur un écran du moniteur de télévision à une vitesse de balayage de télévision relativement élevée, et ledit moyen de mémorisation (3) est conçu pour transformer ladite vitesse de balayage relativement faible en ladite vitesse de balayage de télévision relativement élevée.

# FIG.1

# FIG.2
PRIOR ART

```
┌─────────┐     ┌──────────┐     ┌──────────┐     ┌──────────┐     ┌─────────┐
│ IR CAM  │ ──→ │ A/D CONV │ ──→ │   MEM    │ ──→ │ D/A CONV │ ──→ │ TV MON  │
└─────────┘     └──────────┘     └──────────┘     └──────────┘     └─────────┘
   1               2                 3                6                7

              ┌──────────┐
              │  CLOCK   │
              │   OSC    │
              └──────────┘
                 4
                          ┌──────────┐
                          │ MEM CONT │
                          └──────────┘
                             5
```

# FIG.3
PRIOR ART

*1 *2 *3 *4 *5   *499 *500

① ② ③

FIG.4
PRIOR ART

A/D CONV — 2

D/A CONV — 6

DATA SEL — 303

DATA SEL — 302

301

MEM(1)

MEM(2)

MEM(n)

5012

5013

5011

501

MEM CONT

CLOCK OSC — 401

# FIG.5

# FIG.6

# FIG.7